# FASCICULE DE BREVET EUROPEEN

(11) **EP 0 351 281 B1**
(45) Date de publication et mention de la délivrance du brevet: **19.01.1994**
(21) Numéro de dépôt: 89401879.5
(22) Date de dépôt: 30.06.1989
(51) Int. Cl.: C01B 25/40

(54) **Procédé de préparation de phosphates par fusion**
Verfahren zur Herstellung von Phosphaten durch Schmelzen
Process for the preparation of phosphates by fusion

(30) Priorité: 13.07.1988 FR 8809530
(43) Date de publication de la demande: 17.01.1990
(73) Titulaire: RHONE-POULENC CHIMIE, 92408 Courbevoie Cédex (FR)
(72) Inventeur: Michel, Paul, F-69006 Lyon (FR); Seon, Françoise, F-94120 Fontenay/sous/Bois (FR); Perrier de la Bathie, René, F-73250 Saint-Pierre d'Albigny (FR)
(74) Mandataire: Fabre, Madeleine-France

(56) Documents cités:
- DE-C- 762 903
- DE-C- 877 594
- FR-A- 2 019 120
- FR-A- 2 297 811
- FR-A- 2 540 982
- PATENT ABSTRACTS OF JAPAN, vol. 12, no. 176 (C-498)[3023], 25 mai 1988, page 74 C 498 & JP-A-62283823

## Description

La présente invention concerne un nouveau procédé de préparation de phosphates.

On sait que certains phosphates peuvent être obtenus par fusion de leurs précurseurs. Ainsi, on peut préparer par fusion, des halogénophosphates qui sont des sels de l'anion PO₃X²⁻, formule dans laquelle X est un halogène.

Ces sels sont généralement obtenus par fusion de précurseurs qui peuvent être d'une part des sels d'acide orthophosphorique, d'acide pyrophosphorique ou d'acide métaphosphorique, et d'autre part des sels d'halogénures, comme les halogénures de métaux alcalins ou alcalino-terreux et en particulier le fluorure de sodium.

De même, il est bien connu que l'on peut préparer par fusion de leurs précurseurs, des phosphates du type polyphosphates, qui sont les polymères des orthophosphates ou des pyrophosphates. Parmi les polyphosphates pouvant être obtenus par fusion, on peut citer ceux appartenant aux familles :
- des tripolyphosphates, qui sont des sels de l'acide tripolyphosphorique (dont seuls des sels ont pu être mis en évidence) de formules : H₅P₃O₁₀
- des métaphosphates, qui sont des sels des acides métaphosphoriques de formule (HPO₃)n,

avec n étant un nombre entier,
(quand n est égal à 3 ou 4 l'acide ou son sel est sous forme cyclique et
quand n est supérieur ou égal à 5, l'acide ou son sel est sous forme linéaire).

Les polyphosphates peuvent être préparés par fusion d'orthophosphates.

Sous l'action de la chaleur, les orthophosphates se condensent jusqu'à obtention du polymère désiré. Cependant d'autres précurseurs peuvent également être employés.

Ainsi, les tripolyphosphates peuvent être obtenus par fusion des pyrophosphates, et les métaphosphates par fusion des pyrophosphates, des tripolyphosphates ou d'autres métaphosphates.

Dans ce cas également, c'est un phénomène de condensation sous l'effet de la chaleur (ou thermocondensation) qui se produit. Cette thermocondensation est accompagnée d'un dégagement de vapeur d'eau.

D'une manière générale les phosphates sont salifiés par un ou plusieurs éléments métalliques.

La quantité et la nature de ces éléments métalliques peuvent dépendre des précurseurs phosphatés décrits ci-dessus, mais peuvent également dépendre d'autres précurseurs comme des sels minéraux tels que par exemple, les sels d'halogénures cités ci-dessus, ou de sels de métaux alcalins ou alcalino-terreux.

Jusqu'à présent la préparation des phosphates par fusion a été réalisée au moyen de fours du type fours verriers. Cependant ces fours présentent de nombreux inconvénients.

Ainsi ces fours de grandes dimensions, sont pourvus de parois constituées de briques de matériaux réfractaires liées entre elles par un ciment. D'une manière générale le matériau réfractaire est le zircon.

De ce fait les phosphates obtenus au moyen de ces fours sont toujours pollués par le zirconium, ce qui peut les rendre peu adaptés dans certains domaines d'applications, par exemple, de l'agro-alimentaire.

D'autre part, ces fours n'ont pas l'avantage d'être polyvalents. Ainsi, si ces fours ont servi à préparer, par exemple, un polyphosphate d'un élément métallique, l'emploi ultérieur du même four pour préparer un polyphosphate d'un autre élément métallique, entraîne, là encore, une pollution. En effet, des traces de l'élément métallique du premier polyphosphate vont rester présentes dans le four verrier. Lorsque ce dernier sera utilisé pour préparer l'autre polyphosphate, ces traces vont en diminuer la pureté. De ce fait, un même four verrier n'est généralement utilisé sans inconvénient, que pour la préparation d'un même phosphate.

En outre, il a été constaté que ces fours, lorsqu'ils étaient utilisés pour la production de produits corrosifs comme les halogénophosphates et certains polyphosphates, se perforaient au bout d'un certain temps d'utilisation. Cette perforation semble essentiellement due à l'attaque, par lesdits produits corrosifs, du ciment liant les briques du four.

On ajoutera encore que les fours verriers sont gros consommateurs d'énergie, rendant ainsi le coût des matériaux à préparer relativement élevé, et que, en raison de leurs dimensions importantes il faut plusieurs heures, sinon plusieurs jours, avant d'atteindre la température de fusion.

La demande de brevet FR-A-2297811 décrit un procédé de fabrication en continu de monofluorophosphate de métal alcalin par réaction d'un phosphate et d'un fluorure de métal alcalin dans un four à induction de type à creuset froid constitué d'un matériau isolant réfractaire non conducteur de l'électricité revêtant un récipient ouvert en graphite, le tout étant entouré d'une bobine d'induction. La réaction mise en oeuvre lors de ce procédé doit être réalisée dans des conditions anhydres pour obtenir les meilleurs résultats, c'est à dire pour éviter la formation de pyrophosphate et autres polyphosphates indésirés.

La demande de brevet EP-A-119877 vise la préparation de matériaux céramiques par fusion de leurs composés constitutifs par induction dans un four à auto-creuset.

Afin d'obvier les inconvénients précités des procédés de préparation des phosphates, la demanderesse a mis au point un procédé de préparation par fusion de ces produits qui ainsi, ne sont pas pollués par le zirconium et qui ne requiert pas un contrôle des conditions anhydres de la réaction.

En outre ce procédé permet l'obtention successive de phosphates qui peuvent présenter des éléments métalliques différents. Ce procédé est de plus relativement économique en énergie, de mise en oeuvre rapide et ceci, dans un espace restreint.

Un premier objet de l'invention est donc un tel procédé de fusion.

La présente invention concerne donc un procédé de préparation de phosphates par fusion de leurs précurseurs impliquant la thermocondensation de ces précurseurs, caractérisé en ce que la fusion est réalisée dans un four à induction électromagnétique à auto-creuset à spire directe unique.

Dans le cadre de l'invention, la fusion est généralement réalisée par induction électromagnétique haute fréquence.

Il se trouve que la préparation par fusion des phosphates, impliquant la thermocondensation des précurseurs desdits phosphates, entraîne un dégagement d'eau dans le bain en fusion (dans le cadre de l'invention, on entend donc par thermocondensation, la condensation sous l'effet de la chaleur de précurseurs, cette condensation se traduisant notamment par un dégagement d'eau).

Or il est connu que la présence d'eau dans de telles conditions, entraîne une augmentation considérable de la résistivité. Il s'en suit que ce dégagement d'eau aurait pu causer une entrave que l'on peut qualifier de rédhibitoire, pour un tel procédé de préparation par fusion par induction des phosphates.

Toutefois, la mise en pratique de l'invention a permis de montrer de manière surprenante qu'il n'en était rien, et que la préparation des phosphates par fusion par induction est donc tout à fait réalisable.

Dans le cadre de l'invention, la fusion est préférentiellement réalisée dans un four à induction qui, de manière avantageuse, peut être mis en oeuvre en continu.

Les fours à induction à auto-creuset sont caractérisés par le fait qu'il se forme sur leurs parois une croûte isolante (ou auto-creuset) constituée par le produit à préparer.

A titre de fours à auto-creuset, on peut citer les fours à creusets froids décrits par ailleurs dans l'art antérieur.

Les fours à creusets froids comportent généralement d'une part, un pot constitué d'un matériau bon conducteur de chaleur, tel que le cuivre, dont les parois sont refroidies par circulation d'un liquide réfrigérant tel que l'eau, et d'autre part une spire parcourue par un courant inducteur à haute fréquence.

Certains fours à creuset froid peuvent être utilisés en continu. Ainsi la demande de brevet français N° 2595716 décrit un four comportant un fond percé d'un orifice au travers duquel s'écoulent les produits préparés en fusion.

On utilise dans le cadre de l'invention des fours à auto-creusets dits à spire directe unique. Ces fours sont constitués d'une spire d'un matériau conducteur tel que le cuivre, refroidie par circulation d'un liquide réfrigérant, tel que l'eau. La spire, parcourue par un courant d'induction haute fréquence, constitue elle-même les parois du four.

De manière générale, les fours à spires directes présentent par rapport aux fours à creusets froids, l'avantage d'une consommation électrique moindre et d'un rendement thermique meilleurs.

On a constaté qu'un four à induction à spire unique tel que celui décrit dans le brevet européen N° 119877 permet d'obtenir de très bons résultats. Ce four présente une paroi cylindrique découpée selon une ligne de forme hélicoïdale, formant une spire unique plate à plusieurs tours. Ce four peut être mis en oeuvre de façon continue.

Selon le procédé de l'invention, les précurseurs des phosphates à préparer sont introduits dans le four à induction. Les précurseurs peuvent, par exemple, être sous la forme d'une poudre ou éventuellement d'une pâte.

Le courant d'induction parcourant les parois du four, permet de chauffer lesdits précurseurs par induction électromagnétique jusqu'à leur fusion.

Avantageusement la fusion des précurseurs est démarrée au moyen d'une amorce.

Cette amorce peut être constituée par exemple d'une barre d'un matériau tel que le platine, le zirconium ou le graphite, que l'on introduit dans la masse de la charge des précurseurs. L'amorce chauffe par convection une certaine quantité de précurseurs, puis est retirée de la masse. Généralement l'amorce est retirée dès que 30 à 60% de ladite masse est à l'état fondu. La fusion est alors réalisée uniquement par induction électromagnétique.

Le fait que l'amorce puisse être constituée de zirconium n'entraîne qu'une légère pollution des produits préparés par cet élément. En effet, l'amorce est retirée suffisamment rapidement pour ne polluer qu'une très faible proportion des produits préparés, et ceci uniquement dans la première phase de production. De préférence l'amorce est constituée de graphite non polluant; en outre l'usure d'un tel type d'amorce est faible.

En raison du refroidissement énergique, il se forme rapidement sur les parois internes du four, une croûte de phosphates, qui va isoler le produit en fusion des parois du four. Le produit en fusion peut être alors récupéré par surverse.

Au fur et à mesure que le produit préparé est récupéré, on peut alimenter le four en continu par de nouvelles charges de précurseurs, par exemple au moyen d'une trémie vibrante.

Un perfectionnement du procédé faisant l'objet de l'invention consiste à réaliser la fusion des précurseurs en présence du sel recherché thermocondensé préalablement fondu dans le four à induction. Le volume de sel fondu thermocondensé doit être suffisant pour créer un chauffage à induction et une masse thermique susceptible de fondre les précurseurs introduits ultérieurement. Ce mode opératoire permet une mise en fusion beaucoup plus rapide des précuseurs et évite la condensation de vapeur d'eau sur les parois.

Lorsqu'une opération de préparation d'un phosphate selon le procédé de l'invention est terminée, une nouvelle opération peut alors être conduite et qui peut viser à la préparation d'un autre phosphate.

Pour ce faire, il suffit de briser la croûte formée sur les parois du four et d'y introduire les précurseurs du nouveau produit à préparer.

Selon une caractéristique secondaire de l'invention on peut couvrir les parois internes du four dans lequel sont introduits les précurseurs, par une couche d'un matériau réfractaire. A titre de matériau réfractaire on peut citer le zircon ou la silice.

C'est donc sur cette couche que la croûte constituée des produits à préparer va se former, et non plus directement sur les parois du four.

A nouveau, le fait que cette couche puisse être en zircon n'affecte que très peu la pureté du produit à préparer, dans la mesure où très vite, une croûte desdits phosphates va se former sur la couche de zircon, isolant cette dernière des produits en fusion.

D'une manière générale, le courant d'induction nécessaire pour réaliser la fusion des précurseurs des phosphates à préparer présente une fréquence comprise entre 50 et 500 Kilohertz et de préférence comprise entre 5 et 40 Kilohertz.

A titre de phosphates que l'on peut préparer par fusion selon le procédé de l'invention on peut citer les halogénophosphates et les polyphosphates.

A titre d'halogénophosphates on peut citer les fluorophosphates d'au moins un métal alcalin ou alcalino-terreux et plus particulièrement le monofluorophosphate disodique.

En tant que polyphosphates pouvant être préparés selon le procédé de l'invention on peut citer ceux appartenant aux familles des tripolyphosphates ou des métaphosphates, tels que l'hexamétaphosphate de sodium ou le pentapolyphosphate de sodium. Tous ces sels comportent au moins un élément métallique.

A titre d'élément métallique, on peut notamment citer les métaux alcalins ou alcalino-terreux, l'aluminium, le cuivre, le vanadium et le fer.

Les exemples suivants sont donnés à titre indicatif, et ne peuvent être considérés comme une limite du domaine et de l'esprit de l'invention.

### EXEMPLE 1 : Procédé de préparation d'hexamétaphosphate de sodium

Dans un four à induction à auto-creuset à spire unique, tel que décrit dans le brevet européen N° 119877, présentant un diamètre interne de 600 mm et une hauteur de 300 mm et dont les parois internes sont couvertes d'une couche de zircon, on introduit une charge initiale de 110 kg d'hexanetaphosphate de sodium. Le four est alimenté par un générateur d'une puissance de 50 kilowatt et fonctionnant à la fréquence de 35 Kilohertz. On introduit dans cette charge une amorce en zirconium qui permet de débuter la fusion. Cette amorce est retirée au bout d'environ 2 heures du bain en fusion, et on procède alors à un approvisionnement en continu en pyrophosphate acide disodique.

Cet approvisionnement est réalisé au moyen d'une trémie vibrante, à raison de 60 à 80 kg/heure. L'hexamétaphosphate de sodium produit est récupéré en continu par surverse dans une lingotière puis refroidi.

La production en hexamétaphosphate de sodium est d'environ 80 kg/heure.

Le produit obtenu est broyé après refroidissement au moyen d'un broyeur à couteaux et analysé.

Ce produit présente les caractéristiques suivantes :
- une longueur de chaîne moyenne de 23
- un pourcentage en poids de P₂O₅ supérieur à 65%
- une absence de produits dont la longueur de chaîne est comprise entre 1 et 3
- une quantité d'insolubles nulle.

Le pH d'une solution aqueuse à 1 % en poids de l'hexamétaphosphate de sodium ainsi produit est de 6,25.

### EXEMPLE 2 : Procédé de préparation de pentapolyphosphate de sodium

On introduit dans le même four que celui de l'exemple 1, et parcouru par un même courant d'induction, une charge initiale de 120 kg de pentapolyphosphate de sodium. On introduit une amorce en zirconium que l'on retire au bout de 2 heures.

On alimente alors le four en continu en orthophosphates mono et disodiques dont le rapport massique est le suivant

Na H₂ PO₄ / Na H PO₄ = 2

au moyen d'une trémie vibrante, à raison de 60 à 80 kg/heure.

Le pentapolyphosphate de sodium produit est récupéré en continu par surverse dans une lingotière, puis refroidi.

La productivité en pentapolyphosphate de sodium est de 80 kg/heure.

Le produit refroidi est broyé avec un broyeur à couteaux et analysé.

Le produit obtenu présente les caractéristiques suivantes :
- une longueur de chaîne moyenne comprise entre 4,5 et 5,25
- un rapport Na/P de 1,31
- une densité de verre de 2,45
Une solution aqueuse à 1% de ce pentapolyphosphate de sodium présente un pH de 7,8.

### EXEMPLE 3 : Procédé de préparation de monofluorophosphate disodique (Na₂ PO₃ F)

On introduit dans le même four que celui de l'exemple 1, et parcouru par un même courant d'induction, 70 kg d'une charge initiale constituée par :
71 % d'hexamétaphosphate de sodium
et 29 % de fluorure de sodium
Ces précurseurs sont chauffés au moyen d'une amorce en zirconium jusqu'à fusion.

Au bout de 75 mn, on retire l'amorce et on alimente le four en continu avec une poudre de même nature que celle décrite ci-dessus.

L'alimentation est réalisée au moyen d'une trémie vibrante, à raison de 60 à 80 kg/h.

Après environ 2 heures, le produit obtenu est récupéré en continu par surverse dans une lingotière, puis refroidi.

Le produit analysé présente une teneur en monofluorophosphate disodique de 86 %.

Une solution aqueuse à 1 % du produit obtenu présente un pH de 7,8.

### EXEMPLE 4 : Procédé de préparation de tétrapolyphosphate de sodium (Na₆ P₄ O₁₃)

On introduit dans le même four que celui de l'exemple 1, et parcouru par un même courant d'induction, 80 kg d'une charge initiale constituée par un mélange de phosphates mono et disodiques dont le rapport massique Na H₂ PO₄/Na₂ H PO₄ = 1,38.

Ces précurseurs sont chauffés au moyen d'une amorce en graphite jusqu'à fusion.

Au bout de 75 mn, on retire l'amorce et on alimente le four en continu avec une poudre de même nature que celle décrite ci-dessus.

L'alimentation est réalisée au moyen d'une trémie vibrante, à raison de 60 à 80 kg/h.

Aprés environ 2 heures, le produit obtenu est récupéré en continu par surverse dans une lingotière, puis refroidi.

Le produit présente les caractéristiques suivantes :
- longueur moyenne de chaîne comprise entre 3,9 et 4,3
- rapport molaire Na/P = 1,38 + 0,01
- pH de la solution aqueuse à 1 % = 8,05
- % de P₂ O₅ = 59,85 + 0,5

## Revendications

1. Procédé de préparation de phosphates par fusion de leurs précurseurs impliquant la thermocondensation de ces précurseurs, caractérisé en ce que la fusion est réalisée dans un four à induction électromagnétique à auto-creuset à spire directe unique.

2. Procédé selon la revendication 1 caractérisé en ce que ledit procédé est réalisé en continu.

3. Procédé selon l'une des revendications précédentes caractérisé en ce que la fusion desdits précurseurs est démarrée au moyen d'une amorce.

4. Procédé selon l'une quelconque des revendications précédentes caractérisé en ce que l'opération de fusion des précurseurs est réalisée en présence du phosphate thermocondensé recherché préalablement fondu.

5. Procédé selon l'une quelconque des revendications précédentes caractérisé en ce que la fusion par induction est réalisée au moyen d'un courant d'induction qui présente une fréquence comprise entre 50 hertz et 500 Kilohertz et de préférence comprise entre 5 et 40 Kilohertz.

6. Procédé selon l'une quelconque des revendications précédentes caractérisé en ce que la fusion est réalisée dans un four à induction dont les parois internes sont recouvertes d'une couche d'un matériau réfractaire.

7. Procédé selon l'une quelconque des revendications précédentes caractérisé en ce que l'on prépare des phosphates qui sont des halogénophosphates ou des polyphosphates.

8. Procédé selon la revendication 7 caractérisé en ce que l'on prépare des halogénophosphates qui sont des fluorophosphates d'au moins un métal alcalin ou alcalino-terreux.

9. Procédé selon la revendication 8 caractérisé en ce que l'on prépare un fluorophosphate du type monofluorophosphate disodique.

10. Procédé selon la revendication 7 caractérisé en ce que l'on prépare des polyphosphates qui sont des tripolyphosphates ou des métaphosphates.

11. Procédé selon la revendication 10 caractérisé en ce que l'on prépare des métaphosphates du type hexamétaphosphate de sodium, pentapolyphosphate de sodium ou tetrapolyphosphate de sodium..

## Claims

1. Process for the preparation of phosphates by melting their precursors involving the thermocondensation of these precursors, characterized in that the melting is carried out in a self-forming crucible in an electromagnetic induction furnace with a single direct coil.

2. Process according to Claim 1, characterized in that the said process is carried out continuously.

3. Process according to either of the preceding claims, characterized in that melting of the said precursors is started by means of an initiator.

4. Process according to any one of the preceding claims, characterized in that the operation of melting the precursors is carried out in the presence of the required thermo-condensed phosphate which has been previously melted.

5. Process according to any one of the preceding claims, characterized in that the induction melting is carried out by means of an induction current which has a frequency of between 50 hertz and 500 kilohertz and preferably between 5 and 40 kilohertz.

6. Process according to any one of the preceding claims, characterized in that melting is carried out in an induction furnace, the internal walls of which are covered with a layer of a refractory material.

7. Process according to any one of the preceding claims, characterized in that phosphates which are halophosphates or polyphosphates are prepared.

8. Process according to Claim 7, characterized in that halophosphates which are fluorophosphates of at least one alkali metal or alkaline-earth metal are prepared.

9. Process according to Claim 8, characterized in that a fluorophosphate of the disodium monofluorophosphate type is prepared.

10. Process according to Claim 7, characterized in that polyphosphates which are tripolyphosphates or metaphosphates are prepared.

11. Process according to Claim 10, characterized in that metaphosphates of the sodium hexametaphosphate, sodium pentapolyphosphate or sodium tetrapolyphosphate type are prepared.

## Patentansprüche

1. Verfahren zur Darstellung von Phosphaten durch Verschmelzen ihrer Vorstufen, das die Thermokondensation dieser Vorstufen impliziert, dadurch gekennzeichnet, daß das Verschmelzen in einem von selbst entstehenden Tiegel in einem elektromagnetischen Induktionsofen mit einziger direkter Windung erfolgt.

2. Verfahren nach Anspruch 1, dadurch gekennzeichnet, daß das besagte Verfahren kontinuierlich durchgeführt wird.

3. Verfahren nach einem der vorherigen Ansprüche, dadurch gekennzeichnet, daß das Verschmelzen der besagten Vorstufen mit Hilfe eines Initiators gestartet wird.

4. Verfahren nach einem beliebigen der vorherigen Ansprüche, dadurch gekennzeichnet, daß der Arbeitsgang des Zusammenschmelzens der Vorstufen in Gegenwart des herzustellenden thermokondensierten Phosphats durchgeführt wird, welches zuvor geschmolzen wurde.

5. Verfahren nach einem beliebigen der vorherigen Ansprüche, dadurch gekennzeichnet, daß das Verschmelzen durch Induktion mit Hilfe eines Induktionsstroms durchgeführt wird, der eine Frequenz zwischen 50 Hertz und 500 Kilohertz, vorzugsweise zwischen 5 und 40 Kilohertz, aufweist.

6. Verfahren nach einem beliebigen der vorherigen Ansprüche, dadurch gekennzeichnet, daß das Verschmelzen in einem Induktionsofen durchgeführt wird, dessen Innenwände mit einer Schicht eines hitzebestãndigen Materials überzogen sind.

7. Verfahren nach einem beliebigen der vorherigen Ansprüche, dadurch gekennzeichnet, daß Phosphate dargestellt werden, die Halogenphosphate oder Polyphosphate sind.

8. Verfahren nach Anspruch 7, dadurch gekennzeichnet, daß Halogenphosphate dargestellt werden, die Fluorphosphate mindestens eines Alkali- oder Erdalkalimetalls sind.

9. Verfahren nach Anspruch 8, dadurch gekennzeichnet, daß ein Fluorphosphat vom Typ Dinatriummonofluorphosphat dargestellt wird.

10. Verfahren nach Anspruch 7, dadurch gekennzeichnet, daß Polyphosphate dargestellt werden, die Tripolyphosphate oder Metaphosphate sind.

11. Verfahren nach Anspruch 10, dadurch gekennzeichnet, daß Metaphosphate vom Typ Natriumhexametaphosphat, Natriumpentapolyphosphat oder Natriumtetrapolyphosphat.... dargestellt werden.
